Europäisches Patentamt

European Patent Office

Office européen des brevets

(19)

(11) Veröffentlichungsnummer: **0 309 776 B1**

(12) **EUROPÄISCHE PATENTSCHRIFT**

(45) Veröffentlichungstag der Patentschrift: **13.11.91**

(51) Int. Cl.⁵: **B60R 13/08, B21D 35/00**

(21) Anmeldenummer: **88114502.3**

(22) Anmeldetag: **06.09.88**

(54) **Verkleidung von Einbauteilen und Vorrichtung zu deren Herstellung.**

(30) Priorität: **02.10.87 DE 3733285**

(43) Veröffentlichungstag der Anmeldung:
**05.04.89 Patentblatt 89/14**

(45) Bekanntmachung des Hinweises auf die
Patenterteilung:
**13.11.91 Patentblatt 91/46**

(84) Benannte Vertragsstaaten:
**ES FR GB IT SE**

(56) Entgegenhaltungen:
**CH-A- 186 024**
**DE-C- 146 611**
**US-A- 3 857 453**
**US-A- 4 122 908**
**US-A- 4 335 797**

(73) Patentinhaber: **Pelzer, Helmut**
**Neue Strasse 5**
**W-5804 Herdecke-Ende(DE)**

(72) Erfinder: **Pelzer, Helmut**
**Neue Strasse 5**
**W-5804 Herdecke-Ende(DE)**

(74) Vertreter: **Schneider, Wilhelm, Dipl.-Phys.**
**Danziger Weg 9**
**W-3052 Bad Nenndorf(DE)**

## Beschreibung

Die Erfindung betrifft eine Verkleidung vom Einbauteilen, Karosserieteilen oder dergleichen von Automobilen, insbesondere von schallabsorbierenden Elementen zum Schutz gegen zu hohe Wärmebelastung durch Maschinenteile, Abgasführungen, Katalysatorteile oder dergleichen, bestehend aus einer Aluminiumfolie.

Es ist bekannt, in besonders temperaturbelasteten Bereichen Einbauteile durch Aufkaschieren von Aluminiumfolien zu schützen. Solche Einbauteile sind aus dem DE-U-87 00 919 bekannt. Allerdings hat dies als Nachteil zur Folge, daß die schallabsorbierende Wirkung des unter der Aluminiumkaschierung befindlichen Einbauteiles verloren geht, da der Schall die Aluminiumfolie nicht durchdringen kann.

Die US-A-28 87 173 bezieht sich auf einen Schallabsorber. Eine Wärmereflexion zwecks Wärmedämmung ist damit nicht möglich weil der Körper dieses Schallabsorbers aus Aluminium besteht - Spalte 2, Zeilen 66 bis 68 - und somit eine Wärmebrücke darstellt. Die dort vorgesehenen Bohrungen dienen nicht der Schallabstrahlung sondern sollen mit den in dem Absorber vorhandenen Materialien akustische Resonatoren bilden.

Die aus dem DE-U-19 83 950 bekannte Wellung des Schalldämpfers dient seiner Anpassung an Wände mit konvexer oder konkaver Ausbildung. Die Verwendung von Kunstharz als Material für die Deckschicht verhindert eine wärmereflektierende Wirkung.

Schließlich zeigt die US-A-43 35 797 und US-A-4 122 908 eine geräuschdämpfende Maschinenverkleidung, die den Zutritt von Außenluft zu Kühlzwecken erlaubt, mithin ebenfalls nicht der Wärmereflexion dient.

Ausgehend von diesem Stand der Technik liegt der Erfindung die Aufgabe zugrunde, eine Verkleidung der eingangs beschriebenen Art zu schaffen, die zwar einerseits als Reflektor für Wärmestrahlung wirksam bleibt, andererseits aber für Schallwellen mindestens teilweise durchlässig ist, sodaß darunter befindliche Schallabsorber in Form von Einbauteilen oder dergleichen akustisch wirksam bleiben.

Die erfindungsgemäße Lösung der Aufgabe besteht darin, daß die Aluminiumfolie sowohl perforiert als auch profiliert ist.

Durch die Perforation der Aluminiumfolie wird einerseits die Wirkung der Aluminiumfolie als Wärmereflektor beibehalten, andererseits aber in diesem Bereich eine Durchlässigkeit für Schallwellen erreicht, sodaß die auf der der Schallquelle abgewandten Seite der Aluminiumfolie befindlichen Schallabsorber oder dergleichen wirksam bleiben. Durch die Profilierung der Aluminiumfolie wird eine Vergrößerung der Oberfläche erreicht, die zur Verbesserung der insbesondere diffusen Reflexion von Wärmestrahlungen herangezogen werden kann. Desweiteren wird durch die Profilierung erreicht, daß auch nach einer Aufkaschierung der Aluminiumfolie auf Einbauteile oder dergleichen diese Vergrößerung der Oberfläche erhalten bleibt und darüber hinaus ein optisch einheitliches Bild erreicht wird, wenn diese profilierte Aluminiumfolie an vorgeformte Teile angepaßt aufkaschiert wird.

Desweiteren ist vorteilhaft, daß durch die Profilierung der Aluminiumfolie eine höhere mechanische Festigkeit der Folie erreicht wird, sodaß relativ mehr Öffnungen durch Perforation erzeugt werden können bei dennoch ausreichender mechanischer Festigkeit der Aluminiumfolie. Schließlich ist es auch besonders vorteilhaft, wenn die Perforationslöcher während der Profilierung erzeugt werden.

Beispielsweise kann dies dadurch geschehen, daß die Kanten des Profilierungswerkzeuges als Schneidkanten ausgebildet sind, welche die Aluminiumfolie in entsprechenden Bereichen durchtrennen. Ein einfaches Lochen der unprofilierten Aluminiumfolie ist sehr aufwendig und die entsprechenden Lochwerkzeuge wären einem sehr hohen Verschleiß unterworfen.

Weiterhin ist bevorzugt, daß die Durchbrüche der Perforation in den aus der Ebene der Aluminiumfolie vorstehenden bzw. rückspringenden Bereichen angeordnet sind.

Eine bevorzugte Weiterbildung wird darin gesehen, daß die Aluminiumfolie regelmäßig geformte, in Zeilen und Reihen rechtwinklig zueinander angeordnete, pyramiden- bzw. pyramidenstumpfförmige Eindrücke aufweist, deren die Pyramidenflächen bildende Kanten zur Bildung der Perforation mindestens teilweise durchtrennt sind.

Besonders bevorzugt ist, daß die Perforation in der Stirnfläche des Pyramidenstumpfes angeordnet ist, oder die gesamte Stirnfläche des Pyramidenstumpfes die Perforation bildet.

Bei Verwendung einer olio- oder hydrophobierenden Schicht auf der der Wärmequelle abgewandten Aluminiumfolie ist es von Vorteil, diese als Vlies auszubilden.

Als besondere Ausführungsform kann dabei vorgesehen sein, daß der Schallabsorber allein aus der perforierten und profilierten Aluminiumfolie und einem Trägervlies besteht, auf welches die Aluminiumfolie aufgebracht ist.

In einer weiteren bevorzugten Ausführungsform sind die durch die Trennschnitte gebildeten Folienformschnitte orthogonal zur Ebene des durch den Freischnitt gebildeten Perforationsdurchbruches ausgerichtet und beim Verpressen mit dem Verkleidungswerkstoff, insbesonder einem Vlies, zur Aluminiumfolie hin unter Beibehaltung des Lochcharakters zurückverformt.

Weiterer Gegenstand der Erfindung ist eine Vorrichtung zur Herstellung von Verkleidungen nach dieser Erfindung, die darin besteht, daß ein Profilierungsstempel mit kegel- bzw. pyramidenstumpfartigen Vorsprüngen ausgebildet ist, dessen Stumpfstirnflächen je einen prismatischen bzw. zylinerischen Schneidvorsprung aufweisen.

Insbesondere die mit der vorbeschriebenen Vorrichtung hergestellte perforierte Aluminiumfolie ist zum Verpressen mit entsprechenden Einbaumaterialien, wie Faservliesen oder dergleichen geeignet, da beim Verpressen der so perforierten Folie das entsprechende Loch sich nicht schließen kann, sondern die Folienfreischnitte außerhalb des durch sie gebildeten Loches zur Aluminiumfolie hin zurückverformt werden, sodaß der Lochcharakter erhalten bleibt.

Ein Ausführungsbeispiel der Erfindung ist in zum Teil schematischer Darstellung in der Zeichnung dargestellt und im folgenden näher beschrieben.

Es zeigt:

Fig. 1    eine Vorrichtung zur Herstellung einer erfindungsgemäß ausgestatteten Aluminiumfolie;

Fig. 2    eine Einzelheit einer solchen Aluminiumfolie in Draufsicht;

Fig. 3    desgleichen im Schnitt III-III der Fig. 2 gesehen;

Fig. 4    ein schallabsorierendes Element mit einer damit verpreßten Aluminiumfolie in der Ansich gemäß Fig. 3 gesehen.

Die Verkleidung nach der Erfindung, insbesondere von schallabsorierenden Elementen 1 in Form von Faservliesen oder dergleichen, besteht aus einer Aluminiumfolie 2, die perforiert und profiliert ist. Die durch die Perforierung gebildeten Durchbrüche 3 sind in den aus der Ebene der Aluminiumfolie 2 rückspringenden Bereichen 4 angeordnet. Im Ausführungsbeispiel weist die Aluminiumfolie 2 regelmäßig geformte, in Zeilen und Reihen rechtwinklig zueinander angeordnete pyramidenstumpfförmige Eindrücke 5 auf, wobei die die Pyramidenflächen bildenden Kanten 6 zur Bildung der Perforation mindestens teilweise durchtrennt sein können. Bevorzugt ist aber vorgesehen, daß die Perforation in der Stirnfläche 7 des pyramidenstumpfförmigen Eindruckes 5 angeordnet ist. Insbesondere ist die gesamte Stirnfläche 7 als der die Perforation bildende Durchbruch ausgebildet. Die Herstellung derartiger Verkleidungen kann in der Weise erfolgen, daß die Aluminiumfolie 2 profiliert und anschliessend oder gleichzeitig die Perforation durch Trennschnitte gebildet wird.

Dabei sollen vorzugsweise die durch Trennschnitte gebildeten Folienfreischnitte 8 orthogonal zur Ebene des durch den Freischnitt gebildeten Perforationsdurchbruches 3 ausgerichtet sein. Die so profilierte und perforierte Aluminiumfolie 2 kann dann auf einen Verkleidungsgrundwerkstoff zum Beispiel 1 mit zu dessen Oberfläche hingerichteten Folienfreischnitten 8 aufgebracht und mit diesem verpreßt werden. Bei diesem Vorgang werden die Foliefreischnitte 8 in sich gestaucht, sodaß der Druchbruch 3 nicht beim Verpressen der profilierten Aluminiumfolie mit dem Verkleidungsgrundwerkstoff wieder verschlossen wird. Vielmehr bleiben die Folienfreischnitte 8 weitestgehend außerhalb des Durchbruches angeordnet.

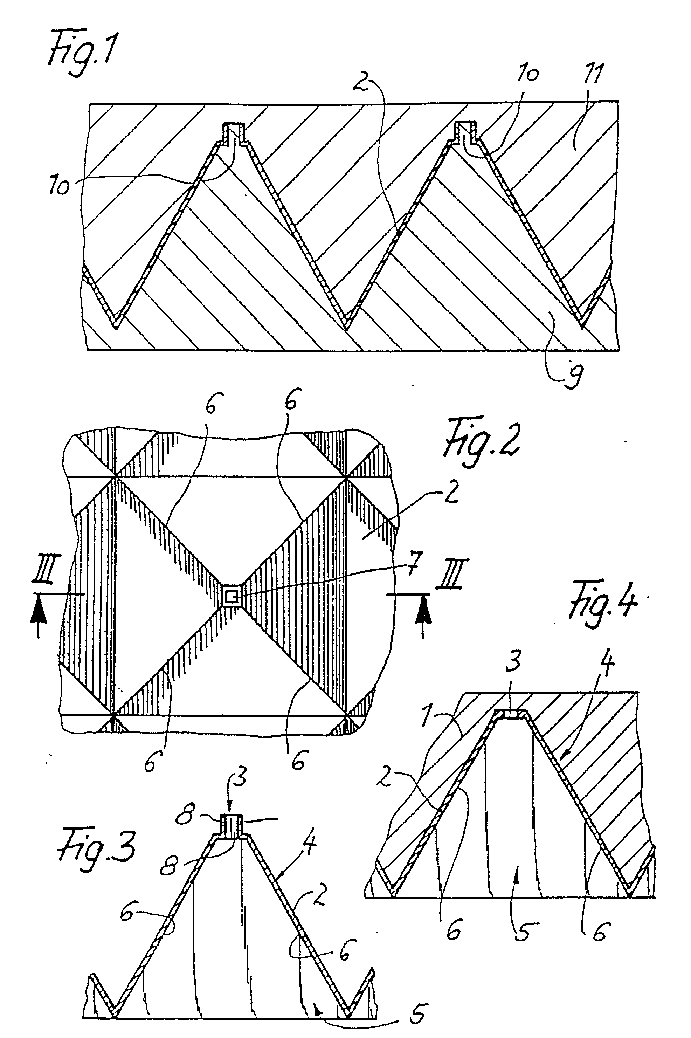

In Figur 1 ist eine Vorrichtung zur Herstellung von perforierten Aluminiumfolien 2 prinzipiell dargestellt. Dabei ist ein Profilierungsstempel 9 mit pyramidenstumpfartigen Vorsprüngen versehen, dessen Stumpfstirnflächen je einen prismatischen oder auch zylinderischen Schneidvorsprung 10 aufweisen. Ferner ist ein Gegenhalter 11 für den Profilierungsstempel 9 vorgesehen. In das Werkzeug wird eine ebene Aluminiumfolie eingelegt und durch Schließen des Werkzeuges in die gewünschte Form verformt und bleibend profiliert.

Gleichzeitig wird dabei durch den Vorsprung 10 ein Durchbruch 3 gebildet, wobei die den Freischnitt 8 bildenden Teile der Aluminiumfolie 2 parallel zur Einschubrichtung des Stempels 9 ausgerichtet werden. Im Bereich der Profilierung sieht die so verformte Aluminiumfolie 2 so aus, wie sie in Figur 2 und 3 beispielsweise dargestellt ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- un Kombinationsmerkmale werden als erfindungswesentlich angesehen.

**Patentansprüche**

1.   Verkleidung von Einbauteilen, Karosserieteilen oder dergleichen von Automobilen, insbesondere von schallabsorierenden Elementen zum Schutz gegen zu hohe Wärmebelastung durch Maschinenteile, Abgasführungen, Katalysatorteile oder dergleichen, bestehend aus einer Aluminiumfolie (2),
dadurch gekennzeichnet,
daß die Aluminiumfolie (2) perforiert und profiliert ist.

2.   Verkleidung nach Anspruch 1,
dadurch gekennzeichnet,
daß die Durchbrüche (3) der Perforation in den aus der Ebene der Aluminiumfolie (2) vorstehenden bzw. rückspringenden Bereichen (5) angeordnet sind.

3.   Verkleidung nach Anspruch 1 oder 2, bei der die Aluminiumfolie regelmäßig geformte, in Zeilen und Reihen rechtwinklig zueinander angeordnete, pyramiden- bzw. pyramidenstumpfförmige Eindrücke aufweist,
dadurch gekennzeichnet,
daß die die Pyramidenflächen bildenden Kanten (6) zur Bildung der Perforation mindestens teilweise durchtrennt sind.

4. Verkleidung nach Anspruch 1 oder einem der folgenden,
dadurch gekennzeichnet,
daß die Perforation in der Stirnfläche des Pyramidenstumpfes angeordnet ist.

5. Verkleidung nach Anspruch 1 oder einem der folgenden,
dadurch gekennzeichnet,
daß die gesamte Stirnfläche (7) des Pyramidenstumpfes die Perforation bildet.

6. Verkleidung nach Anspruch 1 oder einem der folgenden, mit auf der der Wärmequelle abgewandten Aluminiumfolienfläche angeordneter olio- und hydrophobierender Schicht,
dadurch gekennzeichnet,
daß die Schicht als Vlies ausgebildet ist.

7. Verkleidung nach Anspruch 1 oder einem der folgenden,
dadurch gekennzeichnet,
daß die durch Trennschnitte gebildeten Folienfreischnitte (8) orthogonal zur Ebene des durch den Freischnitt (8) gebildeten Perforationsdurchbruches (3) ausgerichtet sind und beim Verpressen mit dem Verkleidungswerkstoff, insbesondere einem Vlies (1), zur Aluminiumfolie hin unter Beibehaltung des Lochcharakters zurückverformt sind.

8. Vorrichtung zum Herstellen von perforierten Aluminiumfolien für Verkleidungen nach einem der Ansprüche 1 bis 7, insbesondere nach Anspruch 7,
dadurch gekennzeichnet,
daß ein Profilierungsstempel (9) mit kegel- bzw. pyramidenstumpfartigen Vorsprüngen ausgebildet ist, dessen Stumpfstirnflächen je einen prismatischen bzw. zylinderischen Schneidvorsprung (10) aufweisen.

**Claims**

1. Cladding of mounting parts, bodywork parts or the like of motor vehicles, in particular of sound-absorbing elements for protection against excessively high thermal stress by engine parts, exhaust ducts, catalyst parts or the like, comprising an aluminium foil (2), characterized in that the aluminium foil (2) is perforated and profiled.

2. Cladding according to Claim 1, characterized in that the openings (3) of the perforation are arranged in the regions (5) projecting from or set back from the plane of the aluminium foil (2).

3. Cladding according to Claim 1 or 2, in which the aluminium foil has regularly formed pyramidal or frustopyramidal indentations arranged at right angles to one another in lines and columns, characterized in that the edges (6) forming the pyramid faces are at least partly cut through to form the perforation.

4. Cladding according to Claim 1 or one of the following, characterized in that the perforation is arranged in the front face of the frustopyramid.

5. Cladding according to Claim 1 or one of the following, characterized in that the entire front face (7) of the frustopyramid forms the perforation.

6. Cladding according to Claim 1 or one of the following, having an oleophobic and hydrophobic layer on the aluminium foil surface facing away from the heat source, characterized in that the layer is in the form of a nonwoven.

7. Cladding according to Claim 1 or one of the following, characterized in that the foil open sections (8) formed by parting cuts are aligned orthogonally to the plane of the perforation opening (3) formed by the open section (8) and, when pressed together with the cladding material, in particular a nonwoven (1), are deformed back towards the aluminium foil while retaining the hole character.

8. Device for producing perforated aluminium foils for claddings according to one of Claims 1 to 7, in particular according to Claim 7, characterized in that a profiling die (9) having frustoconical or frustopyramidal projections is formed, each of the front faces of whose frustum has a prismatic or cylindrical cutting projection (10).

**Revendications**

1. Revêtement d'éléments de montage, éléments de carrosserie ou autres éléments similaires d'automobiles, notamment d'éléments absorbant le son destinés à la protection contre une charge thermique trop élevée sous l'effet d'éléments de machines, guides de gaz d'échappement, éléments catalyseurs ou autres du même genre, revêtement constitué par une feuille d'aluminium (2), caractérisé en ce que la feuille d'aluminium (2) est perforée et profilée.

2. Revêtement selon la revendication 1, caractérisé en ce que les percements (3) de la perforation sont disposés dans les zones (5) faisant saillie ou ressortant du plan de la feuille d'aluminium (2).

3. Revêtement selon la revendication 1 ou 2, pour lequel la feuille d'aluminium comporte des empreintes formées de façon régulière, en forme de pyramides ou de troncs de pyramides, disposées en lignes et en rangées à angle droit les unes par rapport aux autres, revêtement caractérisé en ce que les bords (6) formant les surfaces pyramidales sont, au moins en partie, soumis à un emboutissage partiel pour la formation de la perforation.

4. Revêtement selon la revendication 1 ou l'une des suivantes, caractérisé en ce que la perforation est prévue dans la surface frontale du tronc de pyramide.

5. Revêtement selon la revendication 1 ou l'une des suivantes, caractérisé en ce que toute la surface frontale (7) du tronc de pyramide forme la perforation.

6. Revêtement selon la revendication 1 ou l'une des suivantes, avec couche imperméabilisante à l'huile et à l'eau appliquée sur la surface de la feuille d'aluminium située à l'opposé de la source de chaleur, revêtement caractérisé en ce que la couche est constituée sous la forme de voile.

7. Revêtement selon la revendication 1 ou l'une des suivantes, caractérisé en ce que les découpes ouvertes (8) de la feuille formées par des encoches séparées sont orientées orthogonalement par rapport au plan du percement (3) de la perforation formé par la découpe ouverte (8) et, lors de la compression avec le matériau du revêtement, notamment avec un voile (1), sont redéformées vers la feuille d'aluminium en conservant le caractère de perforation.

8. Dispositif pour la fabrication de feuilles d'aluminium perforées destinées à des revêtements selon l'une des revendications 1 à 7, en particulier selon la revendication 7, dispositif caractérisé en ce qu'un poinçon de profilage (9) est constitué avec des saillies en forme de troncs de cônes ou de troncs de pyramides, dont les surfaces frontales du tronc comportent chacune une saillie de coupe (10) prismatique ou cylindrique.

Fig.1

2   10   11

10

9

6   6

Fig.2

2

III   7   III

Fig.4

3   4

1

2

6   6

6   6

3

8

Fig.3

8   4

6   2

6

6   5   6

5